# EUROPEAN PATENT SPECIFICATION

(11) **EP 3 751 482 B1**
(45) Date of publication and mention of the grant of the patent: **25.02.2026**
(21) Application number: 20179506.9
(22) Date of filing: 11.06.2020
(51) Int. Cl.: G06Q 10/0639

(54) **A METHOD FOR PROCESSING SENSOR INPUT DATA CAPTURED FROM SENSORS PLACED IN A PRODUCTION LINE, AND A SYSTEM THEREOF**
VERFAHREN ZUR VERARBEITUNG VON SENSOREINGANGSDATEN, DIE VON SENSOREN ERFASST WERDEN, DIE IN EINER PRODUKTIONSLINIE ANGEORDNET SIND, UND SYSTEM DAFÜR
PROCÉDÉ DE TRAITEMENT DE DONNÉES D'ENTRÉE DE CAPTEUR CAPTURÉES DE CAPTEURS PLACÉS DANS UNE LIGNE DE PRODUCTION ET SYSTÈME CORRESPONDANT

(30) Priority: 14.06.2019 EP 19180265
(43) Date of publication of application: 16.12.2020
(73) Proprietor: Tetra Laval Holdings & Finance S.A., 1009 Pully (CH)
(72) Inventor: Bergman, Björn, 246 51 Löddeköpinge (SE); MOSER, Maurizio, 42015 Correggio (RE) (IT); Giovanardi, Marco, 41030 San Prospero Sulla Secchia (IT); Rossi, Riccardo, 41043 Magreta (MO) (IT); OLSSON, Niclas, 23439 Lomma (SE)
(74) Representative: Tetra Pak Patent Attorneys

(56) References cited:
- US-A1- 2015 039 401
- US-A1- 2018 039 249

## Description

### Technical Field

The invention relates to the field of food processing, such as liquid food processing and packaging. More particularly, it is related to methods and systems for processing sensor input data captured from sensors placed in a production line.

### Background Art

A food processing line of today is in most cases a complex system comprising a number of different pieces of equipment that can process food products in various ways. There are several reasons for the complexity. One reason is that in order to provide for that the line can be cleaned during operation, some of processing steps may be duplicated. For instance, there may be two or more balance tanks provided in the line such that one of them can be serviced while one or several of the others are used for production during the service, which is beneficial from a production point of view since the service in this way does not require that the line is closed down Another reason for having complex systems is that food producers are interested in having flexible lines that can be used for a number of different products. By having such flexible lines, it is possible for the food producers to process and/or pack different products if needed. Further, many of the food processing lines of today have been upgraded several times over the years, which as an effect results in that the lines become increasingly complex.

In addition to that the food processing lines are complex as such; the level of complexity increases when taking into account that different sensors are being used. For instance, some food producers may prefer to have magnetic relays provided on each door to be able to detect when this is open or closed such that this can be used as input for determining when a machine interruption has occurred. Other food producers may choose not include such relays on all doors, but instead prefer to, for the same purpose, rely on temperature sensors, conductive sensors, flow transmitters etc., which most often is used for analyzing operations or for control purposes.

The complexity of the food processing lines and the sensors used in the food processing lines have effect on the key performance indicators (KPIs) used for keeping track of the performance of the lines. Due to that the lines may be set up differently and that they may comprise different pieces of equipment as well as different types of sensors, it is challenging and time consuming to set up a structure for determining KPIs for a food processing line. Thus, there is a need for methods and systems that can reduce time needed for setting up a system for reliably measuring KPIs.

### Summary

It is an object of the invention to at least partly overcome one or more of the above-identified limitations of the prior art. In particular, it is an object to provide methods and systems for efficiently and reliably set up structures for determining KPIs related to a food processing line.

According to a first aspect it is provided a method for processing sensor input data captured from sensors placed in a production line, said method comprising receiving sensor input data from the sensors placed in the production line by a variables generator, wherein the variables generator comprises a first processor, a first data communications module and a first memory, generating a number of variables based on the sensor input data according to a variable generation scheme, transferring the number of variables to a key performance indicator (KPI) generator, wherein the KPI generator comprises a second processor, a second data communications module and a second memory, and generating a number of key performance indicators (KPIs) based on the number of variables according to a KPI generation scheme.

Alternatively, the variables generator and the KPI generator may share one and the same processor, memory and data communications device.

Further, the method may comprise transferring the number of KPIs to a user interface (UI) enabled device.

The variables generator and the KPI generator may be different physical entities.

The variable generation scheme may be shared among a first group of production lines and the KPI generation scheme may be shared among a second group of the production lines.

The second group may be a sub-set of the first group.

An amendment of the variable generation scheme may be distributed to the production lines of the first group via a variable generation data center.

An amendment of the KPI generation scheme may be distributed to the production lines of the second group.

The KPI generation scheme may be shared in the second group via secure data communications channels.

The production line may be a food production line, such as a liquid food production line.

According to a second aspect it is provided a system arranged to process sensor input data captured from sensors placed in a production line, said system comprising a variables generator arranged to receive sensor input data from the sensors placed in the production line and to generate a number of variables based on the sensor input data according to a variable generation scheme, wherein the variables generator comprises a first processor, a first data communications module and a first memory, and a key performance indicator (KPI) generator arranged to receive the number of variables from the variables generator, and to generate a number of key performance indicators (KPIs) based on the number of variables according to a KPI generation scheme, wherein the KPI generator comprises a second processor, a second data communications module and a second memory.

Further, the KPI generator may be arranged to transfer the number of KPIs to a user interface (UI) enabled device.

The variables generator and the KPI generator may be different physical entities.

The variable generation scheme may be shared among a first group of production lines and the KPI generation scheme may be shared among a second group of the production lines.

The second group may be a sub-set of the first group.

An amendment of the variable generation scheme may be distributed to the production lines of the first group via a variable generation data center.

An amendment of the KPI generation scheme may be distributed to the production lines of the second group.

The KPI generation scheme may be shared in the second group via secure data communications channels.

The production line may be a food production line, such as a liquid food production line.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 illustrates a system comprising a food production line provided with sensors.
Fig. 2 illustrates a variables generator and a KPI generator in further detail.

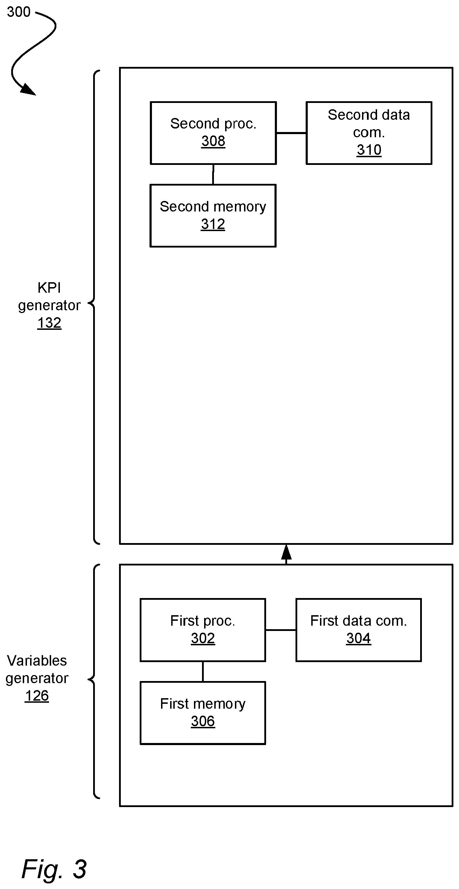

Fig. 3 illustrates an example of a hardware set up for the variables generator and the KPI generator.
Fig. 4 is a flowchart illustrating a method for processing sensor input data captured from sensors placed in a food production line.

### Detailed description

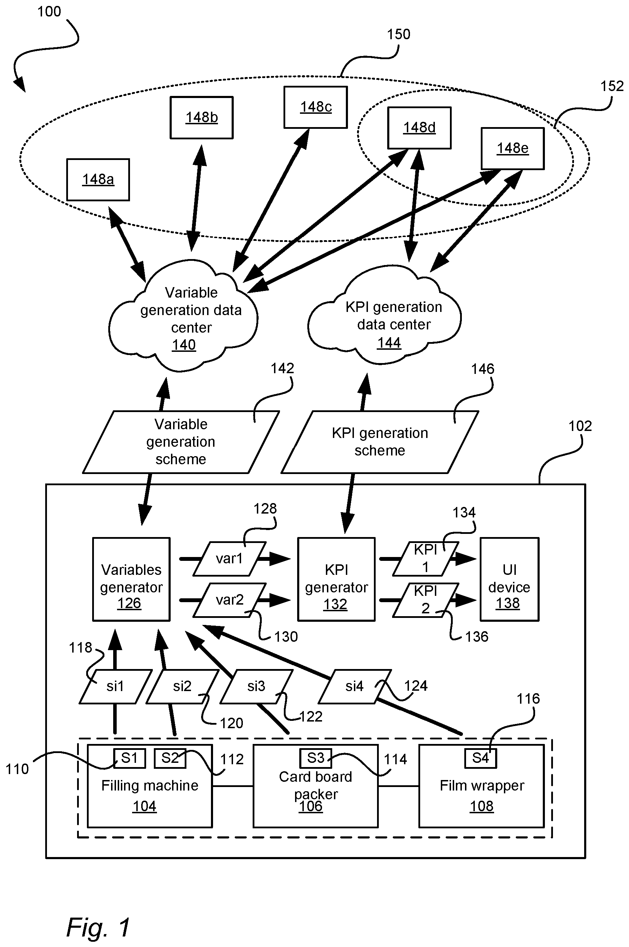

With reference to Fig. 1 a system 100 is illustrated. The system 100 comprises a food production line 102, also referred to as food processing line, which may be a food treatment line comprising steps such as heat treatment, homogenization, filtration and separation, or a food packaging line or a combination thereof. In the example illustrated in Fig.1, the food production line 102 comprises a filling machine 104, a card board packer 106 arranged to group packages and place them in a cardboard tray, and a film wrapper 108 arranged to provide a plastic film around the tray and packages. By way of example, to monitor performance of the food production line 102, a first and second sensor 110, 112 are placed in the filling machine 104, a third sensor 114 is placed in the card board packer 106 and a fourth sensor 116 is placed in the film wrapper 108. The sensors 110-116 may be of various kind. For instance, in case the filling machine 104 is a carton-based roll-fed filling machine, the first sensor 110 may be a temperature sensor for determining that sufficient heat is generated when forming transversal sealings, and the second sensor 112 may be an optical sensor for determining that a web of packaging material is correctly aligned when forming a longitudinal sealing. The third sensor 114 placed in the card board packer 106 may, by way of example be a magnetic-based door sensor for determining whether or not a service door is opened. The fourth sensor 116, also by way of example, may be an optical sensor configured to calculate packages entering the film wrapper 116.

Sensor input data 118, 120 ,122, 124 from the sensors 110, 112, 114, 116 can be fed to a variables generator 126, i.e. data generated and fed from the sensors 110, 112, 114, 116. Based on the sensor input data, the variables generator 126 can be configured to determine a number of variables 128, 130, illustrated as var1 and var2 in fig. 1. The variables may be determined in various ways and sensor input data from one or several of the sensors may be taken into account. For instance, based on the sensor input data 122 from the third sensor 114, a variable called "time service door is opened" may be determined. More particularly, by logging when the service door is opened and a point of time as well as when the service door is closed and a point of time, it can be determined for how long the service door was opened. Further, a variable "packages produced" may be determined based on sensor input data 124 from the fourth sensor 116.

From the variables generator 126 the variables 128, 130 can be fed to a key performance indicator (KPI) generator 132. The KPI generator 132 can be configured to determine KPIs 134, 136 based on the variables 128, 130. For instance, a KPI called "time service door is opened per 1000 packages" may be determined by combining the variables called "time service door is opened" and "packages produced". After having determined the KPIs 134, 136 these may be transmitted to a user interface (UI) device 138, e.g. a personal computer, a mobile phone or a tablet, such that the KPIs can be communicated to an operator.

In case one or several of the sensors 110, 112, 114, 116 are replaced by other sensors or if a piece of equipment in the food production line 102 is replaced with a new piece of equipment, the sensor input data 118, 120, 122, 124 will be altered and as an effect the variables 128, 130 are to be determined in a different manner. By having a number of different ways to generate variables stored in a variable generation data center 140, it may be possible to instead of manually set how the variables are to be determined with the other sensors or with the new piece of equipment, this information may be downloaded from the variable generation data center to the variables generator 126 in the form of a variable generation scheme 142. In case data related to the new piece of equipment is not to be found in the variable generation scheme 142 and this is manually entered by the operator, this data may after having been entered be uploaded to the variable generation data center 140. In this way, by sharing how variables are to be determined for different sensors and for different pieces of equipment, a time for setting up the system 100 may be shortened, and also by sharing a likelihood to find inaccuracies or mistakes will increase, which in turn provides for increased reliability.

In a similar manner, a KPI generation data center 144 may be used for sharing how KPIs are to be determined, and also a KPI generation scheme 146 may be used for downloading and uploading information between the KPI generator 132 and the KPI generation data center 144. However, since the KPIs are closely related to how the food production line 102 can be run efficiently, these may by some food producers be considered as business-critical information that is not to be shared with everyone. For this reason, the information held in the variable generation data center 140 may be shared with a number of food production lines 148a-e, together forming a first group 150, and the information held in the KPI generation data center 144 may be shared with a second group 152, being a subset of the first group, herein comprising the food production lines 148d-e. By separating the variable generation data center 140 and the KPI generation data center 144, it is made possible to collaborate with respect to how the variables are generated, but not with respect to how the variables are used for determining KPIs, e.g. measures based on a combination of different variables. Thus, the time for setting up the system can be shortened and still keep some information within a limited group, e.g. food production lines owned by the same company.

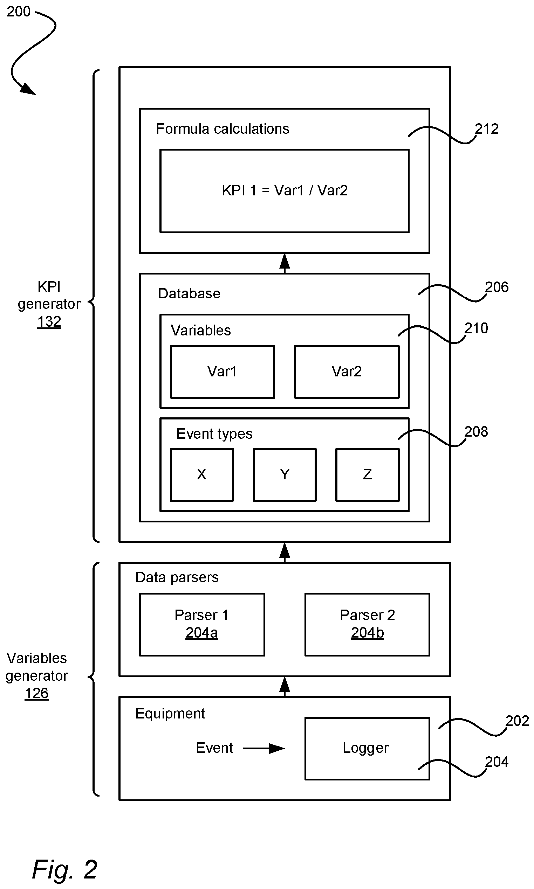

The variables generator 126 and the KPI generator 132 may be set up in different ways. Fig. 2 illustrates by way of example, one possible set up. In a piece of equipment 202, an event may be registered by a logger 204, more particularly a data logger connected to at least one sensor. Data registered by the logger 204 is parsed by parsers, herein by way of example a first and a second parser 204a, 204b, to identify different event types 208, such as service door opened. The event types 208 identified by the data parsers 204a, 204b can be stored in a database 206. By combining the event types 208, variables 210 may be determined. The variables 210 may be transferred to a formula calculations step 212 in which KPIs are determined based on the variables 210. As illustrated, the variables generator 126 may comprise the equipment 202 including the logger 204 and the data parsers 204a, 204b, and the KPI generator 132 may comprise the database 206 and the formula calculations 212.

As set forth above, the variables generator 126 and the KPI generator 132 may be set to share information with the first group 150 and the second group 152, respectively. To assure that the information is not spread unduly the variables generator 126 and the KPI generator 132 may be different physical entities. For instance, the variables generator 126 may comprise a first processor 302, a first data communications module 304 and a first memory 306, and the KPI generator 132 may comprise a second processor 308, a second data communications module 310 and a second memory 312.

Alternatively, one and the same processor, memory and/or data communications module may be used by the variables generator 126 and/or the KPI generator 132.

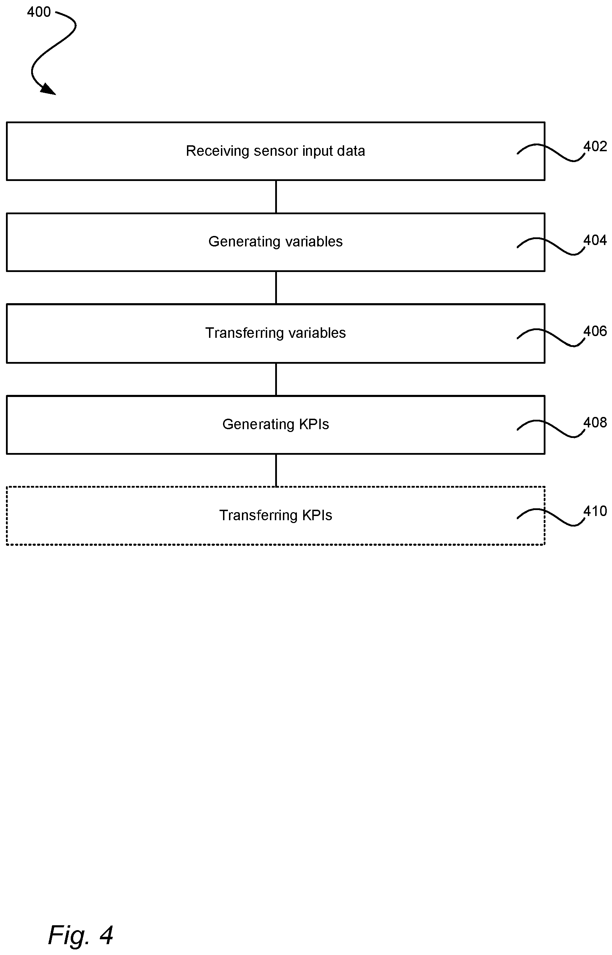

Fig. 4 illustrates a flow chart 400 comprising steps for processing the sensor input data 118, 120 ,122, 124 captured from the sensors 110, 112, 114, 116 placed in the food production line 102. In a first step 402 the sensor input data 118, 120, 122, 124 from the sensors 110, 112, 114, 116 placed in the food production line can be received by a variables generator 126. Thereafter, in a second step 404, a number of variables 128, 130 may be determined based on the sensor input data 118, 120, 122, 124 according to a variable generation scheme. In a third step 406, the number of variables 128, 130 can be transferred to the KPI generator 146. In a fourth step 408 the number of KPIs 134, 136 can be generated based on the number of variables 128, 130 according to the KPI generation scheme 146. Optionally, in a fifth step 410 the number of KPIs can be transferred to the UI enabled device 138.

Even though the production line above is described above in a context of food production, it should be understood that the principles and advantages may also be applied in other fields of production.

## Claims

1. A method (400) for processing sensor input data (118, 120 ,122, 124) captured from sensors (110, 112, 114, 116) placed in a food production line (102), said method comprising
receiving (402) sensor input data (118, 120, 122, 124) from the sensors (110, 112, 114, 116) placed in the production line by a variables generator (126), wherein the variables generator (126) comprises a first processor (302), a first data communications module (304) and a first memory (306), and wherein the input data (118, 120, 122, 124) from the sensors (110, 112, 114, 116) describe measured performance data of the food production line (102),
in response to a replacing of one or several of the sensors (110, 112, 114, 116) by other sensors, downloading, from a variable generation data center (140) that stores a number of different variable generation schemes (142) to the variables generator (126), a variable generation scheme (142), based on the new combination of sensors (110, 112, 114, 116) placed in the food production line (102), wherein the variable generation scheme (142) specifies how to generate variables (128, 130) based on the sensor input data (118, 120, 122, 124) from the new combination of sensors (110, 112, 114, 116),
generating (404), by the variables generator (216), a number of variables (128, 130) based on the sensor input data (118, 120, 122, 124) and the downloaded variable generation scheme (142),
transferring (406) the number of variables (128, 130) to a key performance indicator (KPI) generator (132), wherein the KPI generator (132) comprises a second processor (308), a second data communications module (310) and a second memory (312),
downloading, from a KPI generation data center (144) to the KPI generator (132), a KPI generation scheme (146), based on generated number of variables (128, 130), wherein the KPI generation scheme (146) specifies how to generate KPIs (134, 136) based on the generated number of variables (128, 130),
generating (408), by the KPI generator (146), a number of KPIs (134, 136) for keeping track of the performance of the food production line (102) based on the number of variables (128, 130) and the downloaded KPI generation scheme (146), and
transferring (410) the number of KPIs to a user interface (UI) enabled device (138) associated with an operator.

2. The method according to claim 1, wherein the variables generator (126) and the KPI generator (132) are different physical entities.

3. The method according to any one of the preceding claims, wherein the variable generation scheme (142) is shared among a first group (150) of food production lines (148a-e) and the KPI generation scheme (146) is shared among a second group (152) of the food production lines (148a-e).

4. The method according to claim 3, wherein the second group (152) is a sub-set of the first group (150).

5. The method according to claim 3 or 4, wherein an amendment of the variable generation scheme (142) is distributed to the food production lines (148a-e) of the first group (150) via a variable generation data center (140).

6. The method according to any one of claims 3 to 5, wherein an amendment of the KPI generation scheme (146) is distributed to the food production lines (148d-e) of the second group (152).

7. A system (100) arranged to process sensor input data (118, 120 ,122, 124) captured from sensors (110, 112, 114, 116) placed in a food production line (102), said system (100) comprising
a variables generator (126) arranged to receive sensor input data (118, 120, 122, 124) from the sensors (110, 112, 114, 116) placed in the production line and to generate a number of variables (128, 130) based on the sensor input data (118, 120, 122, 124) according to a variable generation scheme (142),
wherein the variables generator (126) comprises a first processor (302), a first data communications module (304) and a first memory (306),
wherein the input data (118, 120, 122, 124) from the sensors (110, 112, 114, 116) describe measured performance data of the food production line (102),
wherein the variable generation scheme (142) is downloaded, in response to a replacing of one or several of the sensors (110, 112, 114, 116) by other sensors, from a variable generation data center (140) that stores a number of different variable generation schemes (142), based on the new combination of sensors (110, 112, 114, 116) placed in the food production line (102) and specifies how to generate variables (128, 130) based on the sensor input data (118, 120, 122, 124) from the new combination of sensors (110, 112, 114, 116), and
a key performance indicator (KPI) generator (132) arranged to receive the number of variables (128, 130) from the variables generator (126), to generate a number of key performance indicators (KPIs) (134, 136) for keeping track of the performance of the food production line (102) based on the generated number of variables (128, 130) according to a KPI generation scheme (146), and to transfer the number of KPIs (134,136),
wherein the KPI generator (146) comprises a second processor (308), a second data communications module (310) and a second memory (312),
wherein the KPI generation scheme (146) is downloaded from a KPI generation data center (144), based on the generated number of variables (128, 130) specifies how to generate KPIs (134, 136) based on the generated number of variables (128, 130), and
means for transferring (410) the number of KPIs to a user interface (UI) enabled device (138) associated with an operator.

8. The system according to claim 7, wherein the variables generator (126) and the KPI generator (132) are different physical entities.

9. The system according to any one of the claims 7 or 8, wherein the variable generation scheme (142) is shared among a first group (150) of food production lines (148a-e) and the KPI generation scheme (146) is shared among a second group (152) of the food production lines (148a-e).

10. The system according to claim 9, wherein the second group (152) is a sub-set of the first group (150).

11. The system according to claim 9 or 10, wherein an amendment of the variable generation scheme (142) is distributed to the food production lines (148a-e) of the first group (150) via a variable generation data center (140).

12. The system according to any one of claims 9 to 11, wherein an amendment of the KPI generation scheme (146) is distributed to the food production lines (148d-e) of the second group (152).

## Patentansprüche

1. Verfahren (400) zum Verarbeiten von Sensoreingangsdaten (118, 120, 122, 124), die von Sensoren (110, 112, 114, 116) erfasst werden, die in einer Lebensmittelproduktionslinie (102) platziert sind, wobei das Verfahren umfasst:
Empfangen (402) von Sensoreingangsdaten (118, 120, 122, 124) von den Sensoren (110, 112, 114, 116), die in der Produktionslinie platziert sind, durch einen Variablengenerator (126), wobei der Variablengenerator (126) einen ersten Prozessor (302), ein erstes Datenkommunikationsmodul (102) und einen ersten Speicher (306) umfasst, und wobei die Eingangsdaten (118, 120, 122, 124) von den Sensoren (110, 112, 114, 116) gemessene Leistungsdaten der Lebensmittelproduktionslinie (304) beschreiben,
als Reaktion auf ein Ersetzen eines oder mehrerer der Sensoren (110, 112, 114, 116) durch andere Sensoren, Herunterladen, von einem Variablenerzeugungsdatenzentrum (140), das eine Anzahl von verschiedenen Variablenerzeugungsschemata (142) zu dem Variablengenerator (126) speichert, eines Variablenerzeugungsschemas (142) basierend auf der neuen Kombination von Sensoren (110, 112, 114, 116), die in der Lebensmittelproduktionslinie (102) platziert sind, wobei das Variablenerzeugungsschema (142) spezifiziert, wie Variablen (128, 130) basierend auf den Sensoreingangsdaten (118, 120, 122, 124) von der neuen Kombination von Sensoren (110, 112, 114, 116) zu erzeugen sind,
Erzeugen (404), durch den Variablengenerator (216), einer Anzahl von Variablen (128, 130) basierend auf den Sensoreingangsdaten (118, 120, 122, 124) und dem heruntergeladenen Variablenerzeugungsschema (142),
Übertragen (406) der Anzahl von Variablen (128, 130) an einen Key-Performance-Indicator(KPI)-Generator (132), wobei der KPI-Generator (132) einen zweiten Prozessor (308), ein zweites Datenkommunikationsmodul (310) und einen zweiten Speicher (312) umfasst,
Herunterladen, von einem KPI-Erzeugungsdatenzentrum (144) zu dem KPI-Generator (132), eines KPI-Erzeugungsschemas (146) basierend auf einer erzeugten Anzahl von Variablen (128, 130), wobei das KPI-Erzeugungsschema (146) spezifiziert, wie KPIs (134, 136) basierend auf der erzeugten Anzahl von Variablen (128, 130) zu erzeugen sind,
Erzeugen (408), durch den KPI-Generator (146), einer Anzahl von KPIs (134, 136) zum Verfolgen der Leistung der Lebensmittelproduktionslinie (102) basierend auf der Anzahl von Variablen (128, 130) und dem heruntergeladenen KPI-Erzeugungsschema (146), und
Transferieren (410) der Anzahl von KPIs zu einer Benutzeroberflächen(UI)-fähigen Vorrichtung (138), die mit einem Bediener assoziiert ist.

2. Verfahren nach Anspruch 1, wobei der Variablengenerator (126) und der KPI-Generator (132) unterschiedliche physische Entitäten sind.

3. Verfahren nach einem der vorhergehenden Ansprüche, wobei das Variablenerzeugungsschema (142) unter einer ersten Gruppe (150) von Lebensmittelproduktionslinien (148a-e) geteilt wird und das KPI-Erzeugungsschema (146) unter einer zweiten Gruppe (152) der Lebensmittelproduktionslinien (148a-e) geteilt wird.

4. Verfahren nach Anspruch 3, wobei die zweite Gruppe (152) eine Teilmenge der ersten Gruppe (150) ist.

5. Verfahren nach Anspruch 3 oder 4, wobei eine Änderung des Variablenerzeugungsschemas (142) über ein Variablenerzeugungsdatenzentrum (140) an die Lebensmittelproduktionslinien (148a-e) der ersten Gruppe (150) verteilt wird.

6. Verfahren nach einem der Ansprüche 3 bis 5, wobei eine Änderung des KPI-Erzeugungsschemas (146) an die Lebensmittelproduktionslinien (148d-e) der zweiten Gruppe (152) verteilt wird.

7. System (100), das dazu eingerichtet ist, Sensoreingangsdaten (118, 120, 122, 124) zu verarbeiten, die von Sensoren (110, 112, 114, 116) erfasst werden, die in einer Lebensmittelproduktionslinie (102) platziert sind, wobei das System (100) umfasst:
einen Variablengenerator (126), der dazu eingerichtet ist, Sensoreingangsdaten (118, 120, 122, 124) von den Sensoren (110, 112, 114, 116), die in der Produktionslinie platziert sind, zu empfangen und eine Anzahl von Variablen (128, 130) basierend auf den Sensoreingangsdaten (118, 120, 122, 124) gemäß einem Variablenerzeugungsschema (142) zu erzeugen,
wobei der Variablengenerator (126) einen ersten Prozessor (302), ein erstes Datenkommunikationsmodul (304) und einen ersten Speicher (306) umfasst,
wobei die Eingangsdaten (118, 120, 122, 124) von den Sensoren (110, 112, 114, 116) gemessene Leistungsdaten der Lebensmittelproduktionslinie (102) beschreiben,
wobei das Variablenerzeugungsschema (142) als Reaktion auf ein Ersetzen eines oder mehrerer der Sensoren (110, 112, 114, 116) durch andere Sensoren von einem Variablenerzeugungsdatenzentrum (140) heruntergeladen wird, das eine Anzahl verschiedener Variablenerzeugungsschemata (142) speichert, basierend auf der neuen Kombination von Sensoren (110, 112, 114, 116), die in der Lebensmittelproduktionslinie (102) platziert sind, und spezifiziert, wie Variablen (128, 130) basierend auf den Sensoreingangsdaten (118, 120, 122, 124) von der neuen Kombination von Sensoren (110, 112, 114, 116) zu erzeugen sind, und
einen Key-Performance-Indicator(KPI)-Generator (132), der dazu eingerichtet ist, die Anzahl von Variablen (128, 130) von dem Variablengenerator (126) zu empfangen, eine Anzahl von KPIs (Key Performance Indicators) (134, 136) zum Verfolgen der Leistung der Lebensmittelproduktionslinie (102) basierend auf der erzeugten Anzahl von Variablen (128, 130) gemäß einem KPI-Erzeugungsschema (146) zu erzeugen und die Anzahl von KPIs (134, 136) zu transferieren,
wobei der KPI-Generator (146) einen zweiten Prozessor (308), ein zweites Datenkommunikationsmodul (310) und einen zweiten Speicher (312) umfasst,
wobei das KPI-Erzeugungsschema (146) von einem KPI-Erzeugungsdatenzentrum (144) heruntergeladen wird, basierend auf der erzeugten Anzahl von Variablen (128, 130) und spezifiziert, wie KPIs (134, 136) basierend auf der erzeugten Anzahl von Variablen (128, 130) zu erzeugen sind, und
Mittel zum Transferieren (410) der Anzahl von KPIs zu einer Benutzeroberflächen(UI)-fähigen Vorrichtung (138), die mit einem Bediener assoziiert ist.

8. System nach Anspruch 7, wobei der Variablengenerator (126) und der KPI-Generator (132) unterschiedliche physische Entitäten sind.

9. System nach einem der Ansprüche 7 oder 8, wobei das Variablenerzeugungsschema (142) unter einer ersten Gruppe (150) von Lebensmittelproduktionslinien (148a-e) geteilt wird und das KPI-Erzeugungsschema (146) unter einer zweiten Gruppe (152) der Lebensmittelproduktionslinien (148a-e) geteilt wird.

10. System nach Anspruch 9, wobei die zweite Gruppe (152) eine Teilmenge der ersten Gruppe (150) ist.

11. System nach Anspruch 9 oder 10, wobei eine Änderung des Variablenerzeugungsschemas (142) über ein Variablenerzeugungsdatenzentrum (140) an die Lebensmittelproduktionslinien (148a-e) der ersten Gruppe (150) verteilt wird.

12. System nach einem der Ansprüche 9 bis 11, wobei eine Änderung des KPI-Erzeugungsschemas (146) an die Lebensmittelproduktionslinien (148d-e) der zweiten Gruppe (152) verteilt wird.

## Revendications

1. Procédé (400) de traitement de données d'entrée de capteurs (118, 120, 122, 124) capturées à partir de capteurs (110, 112, 114, 116) placés dans une chaîne de production alimentaire (102), ledit procédé comprenant
la réception (402) de données d'entrée de capteurs (118, 120, 122, 124) provenant des capteurs (110, 112, 114, 116) placés dans la chaîne de production par un générateur de variables (126), le générateur de variables (126) comprenant un premier processeur (302), un premier module de communication de données (304) et une première mémoire (306), et les données d'entrée (118, 120, 122, 124) provenant des capteurs (110, 112, 114, 116) décrivant des données de performance mesurée de la chaîne de production alimentaire (102),
en réponse au remplacement d'un ou de plusieurs des capteurs (110, 112, 114, 116) par d'autres capteurs, le téléchargement, depuis un centre de données de génération de variables (140) stockant un certain nombre de schémas de génération de variables (142) différents, vers le générateur de variables (126), d'un schéma de génération de variables (142), sur la base de la nouvelle combinaison de capteurs (110, 112, 114, 116) placés dans la chaîne de production alimentaire (102), le schéma de génération de variables (142) spécifiant la manière de générer des variables (128, 130) sur la base des données d'entrée de capteurs (118, 120, 122, 124) provenant de la nouvelle combinaison de capteurs (110, 112, 114, 116),
la génération (404), par le générateur de variables (216), d'un certain nombre de variables (128, 130) sur la base des données d'entrée de capteurs (118, 120, 122, 124) et du schéma de génération de variables (142) téléchargé,
le transfert (406) du nombre de variables (128, 130) vers un générateur d'indicateurs clés de performance (KPI) (132), le générateur de KPI (132) comprenant un deuxième processeur (308), un deuxième module de communication de données (310) et une deuxième mémoire (312),
le téléchargement, depuis un centre de données de génération de KPI (144) vers le générateur de KPI (132), d'un schéma de génération de KPI (146), sur la base du nombre généré de variables (128, 130), le schéma de génération de KPI (146) spécifiant la manière de générer des KPI (134, 136) sur la base du nombre généré de variables (128, 130),
la génération (408), par le générateur de KPI (146), d'un certain nombre de KPI (134, 136) pour assurer le suivi de la performance de la chaîne de production alimentaire (102) sur la base du nombre de variables (128, 130) et du schéma de génération de KPI (146) téléchargé, et
le transfert (410) du nombre de KPI vers un dispositif (138) compatible avec une interface utilisateur (UI), associé à un opérateur.

2. Procédé selon la revendication 1, dans lequel le générateur de variables (126) et le générateur de KPI (132) constituent des entités physiques différentes.

3. Procédé selon l'une quelconque des revendications précédentes, dans lequel le schéma de génération de variables (142) est partagé entre un premier groupe (150) de chaînes de production alimentaire (148a-e) et le schéma de génération de KPI (146) est partagé entre un deuxième groupe (152) des chaînes de production alimentaire (148a-e).

4. Procédé selon la revendication 3, dans lequel le deuxième groupe (152) est un sous-ensemble du premier groupe (150).

5. Procédé selon la revendication 3 ou 4, dans lequel une modification du schéma de génération de variables (142) est distribuée aux chaînes de production alimentaire (148a-e) du premier groupe (150) via un centre de données de génération de variables (140).

6. Procédé selon l'une quelconque des revendications 3 à 5, dans lequel une modification du schéma de génération de KPI (146) est distribuée aux chaînes de production alimentaire (148d-e) du deuxième groupe (152).

7. Système (100) conçu pour traiter des données d'entrée de capteurs (118, 120, 122, 124) capturées à partir de capteurs (110, 112, 114, 116) placés dans une chaîne de production alimentaire (102), ledit système (100) comprenant
un générateur de variables (126) conçu pour recevoir des données d'entrée de capteurs (118, 120, 122, 124) provenant des capteurs (110, 112, 114, 116) placés dans la chaîne de production et pour générer un certain nombre de variables (128, 130) sur la base des données d'entrée de capteurs (118, 120, 122, 124) selon un schéma de génération de variables (142),
le générateur de variables (126) comprenant un premier processeur (302), un premier module de communication de données (304) et une première mémoire (306),
les données d'entrée (118, 120, 122, 124) provenant des capteurs (110, 112, 114, 116) décrivant des données de performance mesurée de la chaîne de production alimentaire (102),
le schéma de génération de variables (142) étant téléchargé, en réponse au remplacement d'un ou de plusieurs des capteurs (110, 112, 114, 116) par d'autres capteurs, depuis un centre de données de génération de variables (140) stockant un certain nombre de schémas de génération de variables (142) différents, sur la base de la nouvelle combinaison de capteurs (110, 112, 114, 116) placés dans la chaîne de production alimentaire (102) et spécifiant la manière de générer des variables (128, 130) sur la base des données d'entrée de capteurs (118, 120, 122, 124) provenant de la nouvelle combinaison de capteurs (110, 112, 114, 116), et
un générateur d'indicateurs clés de performance (KPI) (132) conçu pour recevoir le nombre de variables (128, 130) provenant du générateur de variables (126), pour générer un certain nombre d'indicateurs clés de performance (KPI) (134, 136) pour assurer le suivi de la performance de la chaîne de production alimentaire (102) sur la base du nombre généré de variables (128, 130) selon un schéma de génération de KPI (146), et pour transférer le nombre de KPI (134, 136),
le générateur de KPI (146) comprenant un deuxième processeur (308), un deuxième module de communication de données (310) et une deuxième mémoire (312),
le schéma de génération de KPI (146) étant téléchargé depuis un centre de données de génération de KPI (144), sur la base du nombre généré de variables (128, 130) et spécifiant la manière de générer des KPI (134, 136) sur la base du nombre généré de variables (128, 130), et
des moyens de transfert (410) du nombre de KPI vers un dispositif (138) compatible avec une interface utilisateur (UI), associé à un opérateur.

8. Système selon la revendication 7, dans lequel le générateur de variables (126) et le générateur de KPI (132) constituent des entités physiques différentes.

9. Système selon l'une quelconque des revendications 7 ou 8, dans lequel le schéma de génération de variables (142) est partagé entre un premier groupe (150) de chaînes de production alimentaire (148a-e) et le schéma de génération de KPI (146) est partagé entre un deuxième groupe (152) des chaînes de production alimentaire (148a-e).

10. Système selon la revendication 9, dans lequel le deuxième groupe (152) est un sous-ensemble du premier groupe (150).

11. Système selon la revendication 9 ou 10, dans lequel une modification du schéma de génération de variables (142) est distribuée aux chaînes de production alimentaire (148a-e) du premier groupe (150) via un centre de données de génération de variables (140).

12. Système selon l'une quelconque des revendications 9 à 11, dans lequel une modification du schéma de génération de KPI (146) est distribuée aux chaînes de production alimentaire (148d-e) du deuxième groupe (152).
